**Europäisches Patentamt**

**European Patent Office**

**Office Européen des brevets**

(19)

(11) Veröffentlichungsnummer: **0 202 401 B1**

# EUROPÄISCHE PATENTSCHRIFT

(12)

(45) Veröffentlichungstag der Patentschrift:
**02.01.91 Patentblatt 91/01**

(51) Int. Cl.$^5$: **G05D 23/22**, B23K 3/04

(21) Anmeldenummer: **86102669.8**

(22) Anmeldetag: **28.02.86**

(54) **Heizelement.**

(30) Priorität: **17.04.85 DE 3513857**

(43) Veröffentlichungstag der Anmeldung:
**26.11.86 Patentblatt 86/48**

(45) Bekanntmachung des Hinweises auf die
Patenterteilung:
**02.01.91 Patentblatt 91/01**

(84) Benannte Vertragsstaaten:
**AT BE CH DE FR GB IT LI LU NL SE**

(56) Entgegenhaltungen:
**EP-A- 0 102 315
CH-A- 523 735
FR-A- 1 456 419
FR-A- 2 394 223
PRODUCT ENGINEERING, Band 26, Nr. 7, Juli
1955, Seite 143; "Quick heating soldering
gun"**

(73) Patentinhaber: **Cooper Industries Inc.
P.O. Box 4446
Houston Texas 77210 (US)**

(72) Erfinder: **Munz, Volker
Besigheimer Strasse 65
D-7125 Kirchheim (DE)**
Erfinder: **Rittmann, Günter
Mozartweg 8
D-7121 Gemmrigheim (DE)**

(74) Vertreter: **Feldkamp, Rainer, Dipl.-Ing. et al
Patentanwälte Wallach, Koch Dr. Haibach,
Feldkamp Postfach 920
D-8000 München 33 (DE)**

## Beschreibung

Aus der CH-A-523 735 ist ein Lötkolben bekannt, bei dem die Temperatur der Lötspitze mit Hilfe eines Meßfühlers in Form eines Thermoelementes gemessen wird, das unmittelbar hinter der Lötspitze angeordnet ist, um die Temperatur der Lötstelle möglichst konstant zu halten. Hierbei werden die Zuleitungen zum Meßfühler und zum Heizwiderstand getrennt zu einer Regelschaltung geführt, wobei das Ausgangssignal des Meßfühlers die Eingangsgröße der Regelschaltung bildet. Daher sind vier Leitungen zur Verbindung des Meßfühlers und des Heizwiderstandes mit der Regelschaltung erforderlich. Allenfalls ist es möglich, eine Leitung des Meßfühlers mit einer Leitung des Heizwiderstandes zu vereinigen, so daß nur eine dreidrähtige Leitungsführung erforderlich ist.

Aus der EP-A-0 048 772 ist weiterhin ein Heißluftgerät bekannt, bei dem der Widerstandswert eines Heizwiderstandes zu den Zeiten gemessen wird, zu denen dieser Heizwiderstand nicht mit Speisestrom beaufschlagt wird. Der Heizwiderstand weist einen entsprechenden Temperaturkoeffizienten auf, so daß sich anhand des Widerstandswertes die Temperatur ermitteln und als Regelkriterium für eine Temperaturregelschaltung verwenden läßt. Auf diese Weise ist ein getrennter Meßfühler nicht erforderlich, so daß auch entsprechende Zuleitungen entfallen können. Die Messung des Widerstandswertes eines Heizwiderstandes ermöglicht jedoch nur dann eine sichere Bestimmung der Temperatur des zu beheizenden Gegenstandes, wenn die Temperatur des zu beheizenden Gegenstandes immer gleich der Temperatur des Heizwiderstandes über dessen gesamte Erstreckung ist, da sich sonst Fehlmessungen ergeben. Dies ist insbesondere dann der Fall, wenn der Heizwiderstand zur Beheizung der Lötspitze verwendet wird, da in diesem Fall der Heizwiderstand eine erhebliche Länge und Abschnitte aufweist, die einen erheblichen Abstand von der Lötstelle am Ende der Lötspitze aufweisen. In diesem Fall ist es daher weiterhin zweckmäßig, zur Erzielung einer genauen Temperaturregelung gemäß der CH-A-523 735 einen getrennten Meßfühler zu verwenden, der so nah wie möglich an der Lötstelle am freien Ende der Lötspitze angeordnet ist.

Aus der Literaturstelle 'Product Engineering', Bd. 26, Nr. 7, Juli 1955, S. 143 'Quick Heating Solvering Gun' ist es weiterhin bekannt, bei einem Lötwerkzeug in Reihe mit einem einen niedrigen Widerstand und einen niedrigen Temperaturkoeffizienten des Widerstandswertes aufweisenden Heizwiderstand ein Regelelement in Form eines Vorwiderstandes mit einem hohen Temperaturkoeffizienten anzuordnen, um beim Einschalten eine sehr schnelle Erwärmung des Heizwiderstandes zu erzielen, wobei der Vorwiderstand durch den durch ihn fließenden Stromes zunehmend erwärmt wird und damit seinen Widerstand erhöht, so daß sich ein Gleichgewichtzustand ergibt. Jede nachfolgende Stromänderung wird durch eine Änderung des Widerstandes des das Regelelement bildenden Vorwiderstandes kompensiert, wodurch die Temperatur unabhängig von Stromschwankungen konstant gehalten wird. Dieses durch den Vorwiderstand gebildete Regelelelement ist räumlich hinter dem den Heizwiderstand enthaltenden Heizelement und erst recht hinter der Lötspitze angeordnet, so daß eine Regelung der Temperatur der Lötspitze nur mit großer zeitlicher Verzögerung und damit sehr ungenau erfolgt. Weiterhin muß der das Regelelement bildende Vorwiderstand einen verglichen mit dem Heizelement großen Widerstand aufweisen, um eine Regelung zu ermöglichen, und die Verwendung dieser Heizelement-Vorwiderstandskombination in Verbindung mit einer elektronischen Regelschaltung zur Steuerung des durch das Heizelement fließenden Stromes wäre nicht sinnvoll.

Aus der EP-A-0 102 315 ist weiterhin ein Lötwerkzeug bekannt, bei dem die Regelschaltung ein ständiges Umschalten zwischen Messen und Heizen durchführt. Hierbei wird der Heizwiderstand als Temperatur-Meßelement ausgenutzt und der während des Meßvorganges durch den Heizwiderstand fließende Strom wird mit Hilfe eines mit dem Heizwiderstand in Reihe geschalteten Meßwiderstandes ausgewertet. Dieser Meßwiderstand ist jedoch von dem Heizwiderstand entfernt in der Regelschaltung angeordnet und die Messung erfolgt bei durchgeschaltetem Leistungsstellglied, wobei der Spannungsabfall am Meßwiderstand gemessen wird und die Eingangsgröße der Regelschaltung bildet. Hierbei muß der Heizwiderstand seinerseits ein PTC- oder ein NTC-Verhalten aufweisen, was bei geregelten Lötkolben, bei denen die Arbeitstemperatur der Lötspitze schnell erreicht werden soll, nicht zweckmäßig ist. Außerdem führt aus den vorstehend hinsichtlich der EP-A-0 048 772 angegebenen Gründen die Verwendung des Heizwiderstandes zur Messung der Temperatur einer von diesem Heizwiderstand beheizten Lötspitze zu Fehlmessungen.

Der Erfindung liegt die Aufgabe zugrunde, ein Heizelement der eingangs genannten Art zu schaffen, das eine genaue Regelung der Temperatur des zu beheizenden Gegenstandes ermöglicht, ohne daß getrennte Meßfühlerzuleitungen erforderlich sind.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Bei dem erfindungsgemäßen Heizelement sind der Meßfühler und der Heizwiderstand elektrisch in Reihe geschaltet, wobei der Meßfühler einen niedrigen elektrischen Widerstand aufweist, so daß die Eigenerwärmung infolge des durch den Heizwiderstand und den Meßfühler fließenden Stromes gering ist. Weiterhin weist der Meßfühler einen möglichst großen Temperaturkoeffizienten auf, und er ist so nahe wie möglich an derjenigen Stelle des zu beheizenden Gegenstandes angeordnet, dessen Temperatur geregelt werden soll.

Der Meßfühler kann gemäß einer Ausgestaltung der Erfindung durch einen Meßwiderstand gebildet sein, dessen Temperaturkoeffizient verglichen mit dem Temperaturkoeffizienten des Heizwiderstandes hoch ist. Der Heizwiderstand sollte vorzugsweise einen vernachlässigbar kleinen Temperaturkoeffizienten aufweisen. Die Temperaturänderung des Meßfühlers wird in diesem Fall vorzugsweise in einer Brückenschaltung ausgewertet, deren einer Zweig durch die Meßfühler-Heizwiderstands-Kombination gebildet ist. In diesem Fall wird zu den Zeiten, zu denen der Heizwiderstand nicht mit Speisestrom beaufschlagt wird, ein Meßstrom in die Meßfühler-Heizwiderstands-Kombination eingeleitet.

Gemäß einer weiteren Ausgestaltung der Erfindung kann der Meßfühler durch ein Thermoelement gebildet sein, wobei in diesem Fall die Verwendung einer getrennten Meßstromquelle entfallen kann.

Die Erfindung wird im folgenden anhand von in der Zeichnung dargestellten Ausführungsbeispielen noch näher erläutert.

In der Zeichnung zeigen :

Figur 1 eine schematische Darstellung der Meßfühler-Heizwiderstands-Kombination in Anwendung auf die Beheizung der Lötspitze eines Lötkolbens,

Figur 2 ein Blockschaltbild einer Ausführungsform einer Betriebsschaltung für das Heizelement.

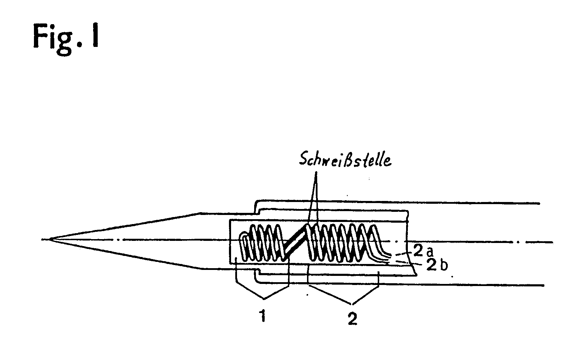

In Fig. 1 ist eine Ausführungsform des Heizelementes dargestellt, das aus einem Meßfühler 1 und einem Heizwiderstand 2 besteht, die im Inneren der Lötspitze 10 eines Lötkolbens angeordnet sind. Selbstverständlich kann auch eine umgekehrte Anordnung verwendet werden, d.h. der Meßfühler und der Heizwiderstand können um den Schaft einer Lötspitze herum angeordnet sein, wenn eine außenbeheizte Löstspitze verwendet wird.

Die Lötspitze gemäß Fig. 1 kann auch durch irgendeinen anderen zu beheizenden Gegenstand ersetzt sein.

Wie aus Fig. 1 zu erkennen ist, sind der Meßfühler und der Heizwiderstand direkt miteinander verbunden. Gemäß Fig. 1 ist der Meßfühler 1 durch eine Widerstandswendel gebildet, die so nahe wie möglich zum vorderen Ende der Lötspitze hin angeordnet ist.

Diese Widerstandswendel könnte auch durch ein Thermoelement ersetzt sein, das ebenfalls von dem durch den Heizwiderstand fließenden Strom durchflossen wird. Die Zuführung des Speisestroms und die Messung der Ausgangsspannung des Meßfühlers erfolgt über zwei Zuleitungen 2a, 2b, so daß die bisher verwendeten zusätzlichen Zuleitungen entfallen können.

Der Heizwiderstand 2 ist verglichen mit dem Innenwiderstand des Meßfühlers sehr hochohmig, so daß praktisch die gesamte Wärme an der Heizwicklung entsteht, wobei es bei Ausbildung des Meßfühlers in Form einer Widerstandswendel zweckmäßig ist, für den Heizwiderstand ein Material mit einem vernachlässigbar kleinen Temperaturkoeffizienten zu verwenden.

Entsprechend sollte der Meßfühler bei Ausgestaltung als Widerstandswendel einen möglichst großen Temperaturkoeffizienten haben.

Durch die getrennte Ausbildung von Meßfühler und Heizwiderstand kann der Meßfühler an einer von dem Heizwiderstand getrennten Stelle angeordnet werden, und zwar an einer Stelle, die so genau wie möglich die tatsächliche Temperatur des zu beheizenden Gegenstandes wiedergibt.

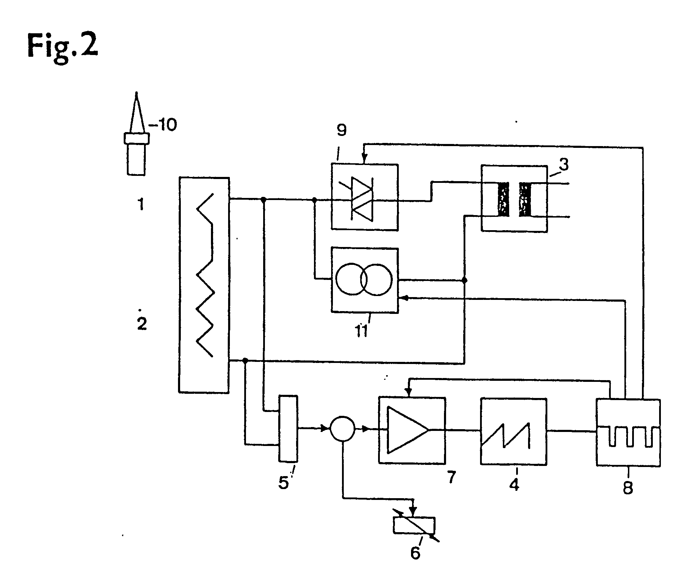

In Fig. 2 ist eine Ausführungsform einer Regelschaltung dargestellt, die zusammen mit der Meßfühler-Heizwiderstands-Kombination nach Fig. 1 verwendet werden kann. Die gesamte Regelschaltung und der Heizwiderstand werden aus einem Netztransformator 3 gespeist, wobei dieser Netztransformator entfallen kann, wenn keine galvanische Trennung vom Wechselspannungsnetz erforderlich ist. Die Sekundärwicklung des Netztransformators 3 speist die Meßfühler-Heizwiderstands-Kombination 1,2 über ein Leistungsstellglied 9, beispielsweise in Form eines Thyristors oder Triak, wobei die Einschaltdauer des Leistungsstellgliedes über eine Synchronisierschaltung 8 gesteuert wird, die ihrerseits über eine noch näher zu erläuternde Meßsignalauswertung angesteuert wird. Diese Synchronisierschaltung 8 steuert eine Meßstromquelle 11 während der Sperrzeiten des Leistungsstellgliedes 9 derart an, daß zu diesen Zeiten ein Meßstrom durch die aus dem Meßfühler 1 und dem Heizwiderstand 2 bestehende Kombination geleitet wird. Diese Meßfühler-Heizwiderstands-Kombination ist weiterhin mit einer Auswerteschaltung 5,7 verbunden, die eine Brückenschaltung 5 einschließt, die Temperaturänderungen des Meßfühlers 1 auswertet. Das Ausgangssignal der Brückenschaltung 5 wird mit einem Sollwert von einem Sollwertgeber 6 verglichen, wobei die Fehlerspannung in einem Verstärker 7 und einer Komparatorschaltung 4 verglichen und als Steuersignal der Synchronisierschaltung 8 zugeführt wird.

Der Fehlerverstärker 7 wird ebenfalls durch das Ausgangssignal der Synchronisierschaltung 8 derart gesteuert, daß er nur im Sperrzustand des Leistungsstellgliedes 9 aktiv ist.

Auf diese Weise ist eine Auswertung der durch Temperaturänderungen hervorgerufenen Widerstandsänderung des Meßfühlers möglich, ohne daß getrennte Zuleitungen zu der Meßfühlers-Heizwiderstands-Kombination erforderlich sind.

Wenn anstelle des Meßfühlers 1 vom Widerstandstyp ein Thermoelement verwendet wird, so kann die Meßstromquelle 11 entfallen und die Spannung des Thermoelementes während der Sperrzeiten des Leistungsstellgliedes 9 in der Brückenschaltung 5 ausgewertet werden.

Unabhängig davon, ob der Meßfühler 1 in Form einer Widerstandswendel oder eines Thermoelementes ausgebildet ist, ist der Widerstand dieses Meßfühlers sehr gering, so daß er sich durch den durch den Heizwiderstand und den Meßfühler fließenden Betriebsstrom nicht wesentlich erwärmt. Andererseits weist der Heizwiderstand einen möglichst vernachlässigbaren Temperaturkoeffizienten auf, so daß der Einfluß von Widerstandsänderungen des Heizwiderstandes bei der Auswertung des Meßsignals vernachlässigbar ist.

## Ansprüche

1. Heizelement zur Beheizung eines Gegenstandes (10), insbesondere der Lötspitze eines Lötkolbens, mit einem Heizwiderstand (2) und mit einem Meßfühler (1) zur Messung der Temperatur des Gegenstandes (10), wobei das Ausgangssignal des Meßfühlers (1) die Eingangsgröße der Auswerteschaltung (5, 7) einer Regelschaltung (4-8) mit einem Leistungsstellglied (9) zur Steuerung des durch den Heizwiderstand (2) fließenden Stromes bildet und der Meßfühler (1) im wesentlichen an der Stelle des vom dem Heizwiderstand (2) beheizten Gegenstandes (10) angeordnet ist, dessen Temperatur geregelt werden soll,
dadurch **gekennzeichnet**, daß der einen verglichen mit dem Heizwiderstand (2) kleinen elektrischen Widerstand aufweisende Meßfühler (1) mit dem Heizwiderstand (2) elektrisch in Reihe geschaltet ist und das Ausgangssignal der Meßfühler-Heizwiderstands-Kombination (1, 2) der Auswerteschaltung (5, 7) zugeführt wird.

2. Heizelement nach Anspruch 1,
dadurch **gekennzeichnet**, daß die Regelschaltung eine Synchronisierschaltung (8) enthält, die das Leistungsstellglied periodisch durchschaltet bzw. sperrt, und daß die Auswerteschaltung (5, 7) das Ausgangssignal der Synchronisierschaltung (8) empfängt und nur während des Sperrzustandes des Leistungsstellgliedes (9) freigegeben ist.

3. Heizelement nach Anspruch 1 oder 2,
dadurch **gekennzeichnet**, daß der Meßfühler (1) durch einen Meßwiderstand gebildet ist, dessen Temperaturkoeffizient verglichen mit dem Temperaturkoeffizienten des Heizwiderstandes (2) hoch ist.

4. Heizelement nach Anspruch 3,
dadurch **gekennzeichnet**, daß der Temperaturkoeffizient des Heizwiderstandes (2) vernachlässigbar klein ist.

5. Heizelement nach Anspruch 3 oder 4,
dadurch **gekennzeichnet**, daß die Regelschaltung eine Meßstromquelle (11) enthält, die durch die Synchronisationsschaltung (8) derart steuerbar ist, daß sie nur während des Sperrzustandes des Leistungsstellgliedes (9) einen Meßstrom durch die Meßfühler-Heizwiderstands-Kombination (1, 2) leitet.

6. Heizelement nach Anspruch 5,
dadurch **gekennzeichnet**, daß die Auswerteschaltung (5, 7) eine Brückenschaltung (5) aufweist, in deren einem Zweig die Meßfühler-Heizwiderstands-Kombination (1, 2) angeordnet ist.

7. Heizelement nach Anspruch 1 oder 2,
dadurch **gekennzeichnet**, daß der Meßfühler ein Thermoelement ist.

## Claims

1. A heating element for heating an object (10), especially the soldering tip of a soldering bit, comprising a heating resistor (2) and a measuring element (1) for measuring the temperature of the object (10), the output signal of the measuring element (1) forming the input quantity of the evaluator circuit (5, 7) of a regulating circuit (4-8) with a power control element (9) for controlling the current flowing through the heating resistor (2) and the measuring element (1) being arranged at substantially the point of the object (10) heated by the heating resistor (2), the temperature of which is to be regulated, characterized in that the measuring element (1), which has an electrical resistance which is small when compared with the heating resistor (2), is electrically connected in series with the heating resistor (2) and in that the output signal of the measuring element/heating resistor combination (1, 2) is supplied to the evaluator circuit (5, 7).

2. A heating element according to claim 1, characterized in that the regulating circuit comprises a synchronizing circuit (8), which periodically connects through or blocks the power control element, and in that the evaluator circuit (5, 7) receives the output signal of the synchronizor circuit (8) and is only released while the power control element (9) is in the blocked state.

3. A heating element according to claim 1 or claim 2, characterized in that the measuring element (1) is formed of a measuring resistor, the temperature coefficient of which is high compared with the temperature coefficients of the heating resistor (2).

4. A heating element according to claim 3, characterized in that the temperature coefficient of the heating resistor (2) is negligibly small.

5. A heating element according to claim 3 or claim 4, characterized in that the regulating circuit contains a measurement current source (11), which is controlled by the synchronization circuit (8) in such a way that it only conducts a measurement current through the measuring element/heating resistor combination (1, 2) while the power control element (9) is in the blocked state.

6. A heating element according to claim 5, characterized in that the evaluator circuit (5, 7) comprises a bridge circuit (5), in one branch of which there is arranged the measuring element/heating resistor combination (1, 2).

7. A heating element according to claim 1 or claim 2, characterized in that the measuring element is a thermocouple.

## Revendications

1. Elément chauffant pour chauffer un objet (10), en particulier la panne d'un fer à souder, comprenant une résistance chauffante (2) et comprenant un capteur (1) pour mesurer la température de l'objet (10), cependant que le signal de sortie du capteur (1) constitue la grandeur d'entrée du circuit d'exploitation (5, 7) d'un circuit de régulation (4-8) comprenant un organe de réglage de la puissance (9) pour commander le courant qui passe à travers la résistance chauffante (2), et que le capteur (1) est disposé, pour l'essentiel, à l'endroit de l'objet (10) qui est chauffé par la résistance chauffante (2) et dont la température doit être régulée, caractérisé par le fait qu'un capteur (1) qui présente une résistance électrique faible en comparaison de la résistance chauffante (2) est monté électriquement en série avec la résistance chauffante (2), et que le signal de sortie de la combinaison capteur-résistance chauffante (1, 2) est amené au circuit d'exploitation (5,7).

2. Elément chauffant selon la revendication 1, caractérisé par le fait que le circuit de régulation contient un circuit de synchronisation (8) qui rend périodiquement l'organe de réglage de la puissance passant et bloqué, respectivement, et par le fait que le circuit d'exploitation (5, 7) reçoit le signal de sortie du circuit de synchronisation (8) et n'est libéré que pendant l'état de blocage de l'organe de réglage de la puissance (9).

3. Elément chauffant selon la revendication 1 ou 2, caractérisé par le fait que le capteur (1) est constitué par une résistance de mesure dont le coefficient de température est élevé en comparaison du coefficient de température de la résistance chauffante (2).

4. Elément chauffant selon la revendication 3, caractérisé par le fait que le coefficient de température de la résistance chauffante (2) est assez faible pour être négligeable.

5. Elément chauffant selon la revendication 3 ou 4, caractérisé par le fait que le circuit de régulation contient une source de courant de mesure (11) qui peut être commandée par le circuit de synchronisation (8) de telle sorte qu'elle ne conduise un courant de mesure à travers la combinaison capteur-résistance chauffante (1, 2) que pendant l'état de blocage de l'organe de réglage de la puissance (9).

6. Elément chauffant selon la revendication 5, caractérisé par le fait que le circuit d'exploitation (5, 7) comporte un circuit en pont (5) dans une des branches duquel est disposée la combinaison capteur-résistance chauffante (1, 2).

7. Elément chauffant selon la revendication 1 ou 2, caractérisé par le fait que le capteur est un thermo-couple.

Fig. 1

# Fig.2